# EUROPEAN PATENT APPLICATION

(11) **EP 0 756 280 A2**
(43) Date of publication of application: **29.01.1997**
(21) Application number: 96305385.5
(22) Date of filing: 23.07.1996
(51) Int. Cl.: G11B 20/10

(54) **Encoding/decoding apparatus provided with input/output interface for external equipment**

(30) Priority: 26.07.1995 JP 190171/95
(71) Applicant: MATSUSHITA ELECTRIC INDUSTRIAL CO., LTD., Kadoma-shi, Osaka 571 (JP)
(72) Inventor: Narikawa, Masaya, Osaka-shi, Osaka 558 (JP); Ishigami, Haruko, Moriguchi-shi, Osaka 570 (JP); Nishikawa, Yutaka, Kobe-shi, Hyogo, 651-22 (JP); Ueda, Mitsunori, Ibaraki-shi, Osaka 567 (JP)
(74) Representative: Crawford, Andrew Birkby

(57) **Abstract**

The present invention aims that an external equipment can easily utilize a writing/reading part (1) such as a CD-ROM driver, a decoding processing part (2) and a display part (3) inside an encoding/decoding apparatus built in a television receiver without deteriorating previous decoding function.

A signal switcher (6) and an input/output interface (5) for an external equipment (7) are provided with in a encoding/decoding apparatus. A display part (30) in the encoding/decoding apparatus can be utilized by controlling a signal switcher (6) to select either a signal from a writing/reading part (1) or an external signal from the input/output interface for an external equipment (701) by a control microcomputer (701) and supplying the output of the signal switcher to a display part through a decoding processing part (201).

## Description

### BACKGROUND OF THE INVENTION

The present invention relates to a television receiver, a game machine and the like with a built-in data encoding/decoding apparatus for a recording medium such as a CD (compact disk), an HD (hard disk), DVD (digital video disk), LD (laser disk) and the like.

In recent years, equipment or apparatus with a built-in data encoding/decoding apparatus is widely on the market.

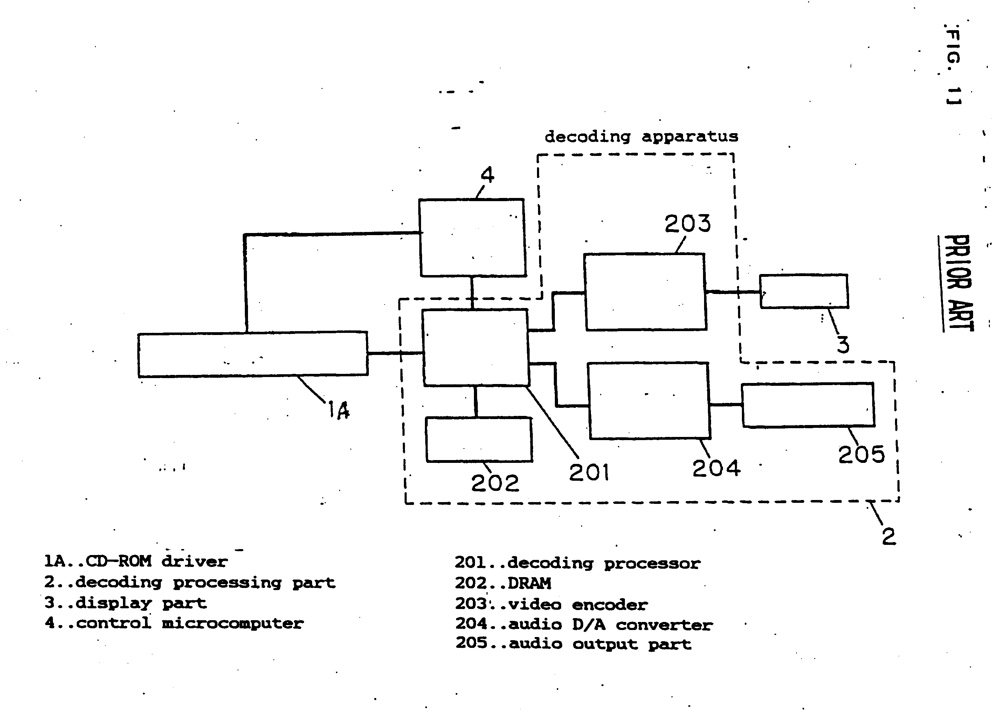

In such equipment or apparatus, the built-in data encoding/decoding apparatus can generally be used only in the equipment or apparatus. An example of television receivers with a built-in CD-ROM driver as an encoding/decoding part is explained below referring to FIG. 1.

In FIG. 1, the block 1A is an encoding/decoding part and is composed of a CD-ROM driver for reading a data. The block 2 is a decoding processing part for processing a data read at CD-ROM driver 1A. The block 3 is a display part for displaying a data processed at decoding processing part 2. The block 4 is a control microcomputer. In decoding processing part 2, the block 201 is a decoding processor for decoding a data read at CD-ROM driver 1A and is usually made of an LSI (large scale integrated circuit). The block 202 is a D-RAM (dynamic random access memory) for temporarily storing a data. The block 203 is a video encoder for encoding a video signal decoded at decoding processor 201 into, for example, an NTSC (National Television System Committee) signal. The block 204 is an audio D/A (digital to analog) converter for converting an audio data decoded at decoding processor 201 into an analog signal. The block 205 is an audio output part such as a speaker for outputting an analog audio signal.

The decoding function of the above configuration is explained below. Referring to FIG. 1, when control microcomputer 4 sends a decoding command to CD-ROM driver 1A and decoding processor 201, the CD-ROM driver 1A sends a data read from a CD (compact disk) to decoding processor 201. Decoding processor 201 temporarily stores the received data in DRAM 202 and decodes and processes after dividing it into a video signal and an audio signal. Video encoder 203 encodes the decoded video signal into an NTSC signal and displays the encoded signal at display part 3. Audio D/A converter 204 converts the digital audio signal butputted from decoding processor 201 into an analog audio signal and output sound from a speaker at audio output part 205.

In such a usual television receiver with a CD-ROM driver as a writing/reading apparatus, the signal read from the built-in CD-ROM 1A can not be outputted to an external equipment. Therefore, the same picture as the picture on the television receiver can not be watched on the other monitor.

In the case in which a signal format outputted from the external equipment is different from the signal format for the display part, the video signal decoded at the external equipment can not be displayed on the display part. Accordingly, it is impossible that a picture on a portable equipment such as a knee top personal computer can be enjoyed as a large screen picture.

The present invention solves the above problems and aims to present an encoding/decoding apparatus in which a writing/ reading part, a decoding processor and a display part can be easily used from an external equipment.

### SUMMARY OF THE INVENTION

To achieve the above object, an encoding/decoding apparatus in accordance with first to third inventions include
a writing/reading part for writing and reading a data,
a decoding processing part for decoding and processing the data read;
a display part for displaying the data processed at the decoding processing part;
an input/output interface part for an external equipment (I/F part, hereafter) for transferring the data from the writing/reading part to the external equipment or transferring the data from the external equipment to the writing/reading part and for generating a connection signal when the external equipment is connected;
a signal switcher for switching the data from the writing/reading part so as to transfer to either the decoding processing part or the I/F part and for switching the data from the external equipment so as to transfer to either the writing/reading part or the decoding processing part; and
a control microcomputer for controlling the writing/reading part, the decoding processing part, the signal switcher and the I/F part.

In the case in which the external equipment uses the writing/reading part, the signal switcher is controlled by the control microcomputer so that the writing/reading part and the I/F part are connected each other. When the external equipment sends a decoding command to the writing/reading part, the writing/reading part reads a data and the data is transmitted to the external equipment through the signal switcher and the I/F part.

In the case in which a data from the external equipment is written in the built-in writing/reading part, the signal switcher is controlled by the control microcomputer so that the writing/reading part and the I/F part are connected each other.

Thus, the writing/reading part built in an encoding/decoding apparatus can be used as a writing/reading part for an external equipment and the data from the external equipment can be displayed on the display part of the encoding/decoding apparatus.

An encoding/decoding apparatus in accordance with a fourth invention includes
a writing/reading part for writing and reading a data,
a decoding processing part for decoding and processing the data read;
a display part for displaying the data processed at the decoding processing part;
an I/F part for converting the data from the external equipment and for generating a connection signal when the external equipment is connected;
a signal switcher for switching which the data to the display part is taken from either the decoding processing part or the I/F part; and
a control microcomputer for controlling the writing/reading part, the decoding processing part, the I/F part and the signal switcher.

In the case in which the external equipment uses the display part in the encoding/decoding apparatus, the signal switcher is switched by the control microcomputer so that the I/F part is connected to the display part. When the external equipment inputs a data signal to the decoding apparatus, the control microcomputer controls the I/F part to convert the data signal from the external equipment into a signal format suitable for the display part. The display part displays the converted signal. Thus, the output signal can be displayed on the display part in the encoding/decoding apparatus.

An encoding/decoding apparatus in accordance with a fifth invention includes
a writing/reading part for writing and reading a data,
a decoding processing part for decoding and processing the data read;
an I/F part for transferring the data from the writing/reading part to an external equipment or for transferring a data from the external equipment to the writing/reading part and generating a connection signal when the external equipment is connected;
a display part for displaying the data processed at the decoding processing part or a signal inputted from an external equipment through the I/F part;
a first signal switcher for switching the data from the writing/reading part so as to transfer to either the decoding processing part or the I/F part and for connecting the I/F part and the decoding processing part so that a data from the external equipment is transferred to the decoding processing part;
a second signal switcher for switching which the input signal to the display part is taken, from either the decoding processing part or the I/F part; and
a control microcomputer for controlling the writing/reading part, the decoding processing part, the first signal switcher, the second signal switcher and the I/F part.

In the case in which the external equipment uses the writing/reading part in the encoding/decoding apparatus, the first signal switcher is controlled by the control microcomputer so that the writing/reading part and the I/F part are connected each other. When the external equipment sends a decoding command to the writing/reading part, the writing/reading part reads a data and the data is transmitted to the external equipment through the first signal switcher and the I/F part.

Also in the case in which a data from the external equipment is written in the writing/reading part, the first signal switcher is controlled by the control microcomputer so that the writing/reading part and the I/F part are connected each other.

Thus, the writing/reading part built in the encoding/ decoding apparatus can be used as a writing/reading part for the external equipment.

In the case in which the output from the external equipment is displayed on the display part in the encoding/ decoding apparatus, which signal outputted from the external equipment is, a data signal or a video signal is judged at the control microcomputer. When it is a data signal, the first signal switcher is switched by the control microcomputer so as to connect the I/F part to the decoding processing part and the second signal switcher is switched also by the control microcomputer so as to connect the decoding processing part to the display part.

When it is a video signal, the second signal switcher is switched also by the control microcomputer so as to connect the I/F part to the display part and the signal from the external equipment is converted into a signal format suitable for the display part and is sent to the display part through the second signal switcher.

Thus, the signal from the external equipment can be displayed on the display part in the encoding/decoding apparatus.

### BRIEF DESCRIPTION OF THE DRAWINGS

FIG. 1 is a block diagram of a CD-ROM driver in accordance with the prior art.

FIG. 2 is a block diagram of an encoding/decoding apparatus providing with an input/output interface for an external equipment in accordance with a first exemplary embodiment of the present invention.

FIG. 3 is a block diagram of an encoding/decoding apparatus providing with an input/output interface for an external equipment in accordance with a second exemplary embodiment of the present invention.

FIG. 4 is a block diagram of an encoding/decoding apparatus providing with an input/output interface for an external equipment in accordance with a third exemplary embodiment of the present invention.

### DETAILED DESCRIPTION OF THE INVENTION

### (First exemplary embodiment)

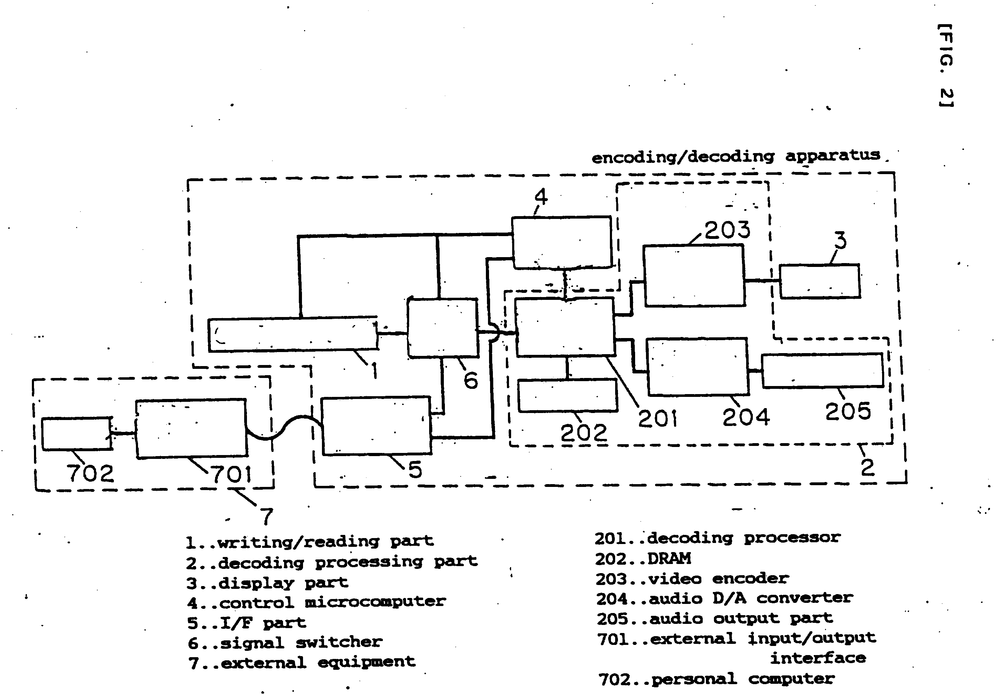

A block diagram of an encoding/decoding apparatus providing with an input/output interface for an external equipment in accordance with a first exemplary embodiment of the present invention is shown in FIG. 2.

Referring to FIG. 2, the block 1 is a writing/reading part such as a CD-RAM driver having a recordable medium. A decoding processing part 2, a display part 3 have similar functions to those having the same reference numbers in FIG. 1. The block 7 is an external equipment. The block 5 is an input/output interface for an external equipment (I/F part, hereafter) for transferring a data from writing/reading part 1 to external equipment 7 and generating a connection signal when the external equipment 7 is connected. The block 6 is a signal switcher for switching a data read at writing/reading part 1 to supply to either decoding processing part 2 or I/F part 5 by being controlled by control microcomputer 4. The block 702 in external equipment 7 is a personal computer and the block 701 is an input/output interface for transferring a data from the personal computer 702. The block 4 is a control microcomputer and controls writing/reading part 1, decoding processing part 2, I/F part 5 and signal switcher 6.
(1) The case in which a data read at writing/reading part 1 is displayed on display part 3.
   In FIG. 2, control microcomputer 4 controls signal switcher 6 to connect writing/reading part 1 to decoding processing part 2 and sends a decoding command to writing/reading part 1 and decoding processing part 2. The decoding processing part 2 receives a data read at the writing/reading part 1 through the signal switcher 6 and similarly processes to the prior art. Display part 3 displays the processed data.
(2) In the case in which a signal from external equipment 7 is displayed on display part 3 of encoding/decoding apparatus.
   When I/F part 5 detects that external equipment 7 is connected, a control signal indicating the connection is sent from I/F part 5 to control microcomputer 4. Control microcomputer 4 sends a control signal for determining a transmission direction of the signal to signal switcher 6. Thus, a route from personal computer 702 to display part 3 through external input/output interface 701, I/F part 5, signal switcher 6 and decoding processing part 2 in order is made. A signal is sent from personal computer 702 to display part 3 through the above route and a picture is displayed on display part 3.
(3) In the case in which a data from external equipment 7 is written in writing/reading part 1.
   When I/F part 5 detects that external equipment 7 is connected, a control signal indicating the connection is sent from I/F part 5 to control microcomputer 4. Control microcomputer 4 sends a control signal for determining a transmission direction of the signal to signal switcher 6. Thus, a route from personal computer 702 to writing/reading part 1 through external input/output interface 701, I/F part 5 and signal switcher 6 in order is made. A bit-stream data signal to be written and a control signal are sent from personal computer 702 to writing/reading part 1 through the above-mentioned route. Writing/reading part 1 received the data signal writes the data into a recording medium.
(4) The case in which external equipment 7 utilizes writing/reading part 1.

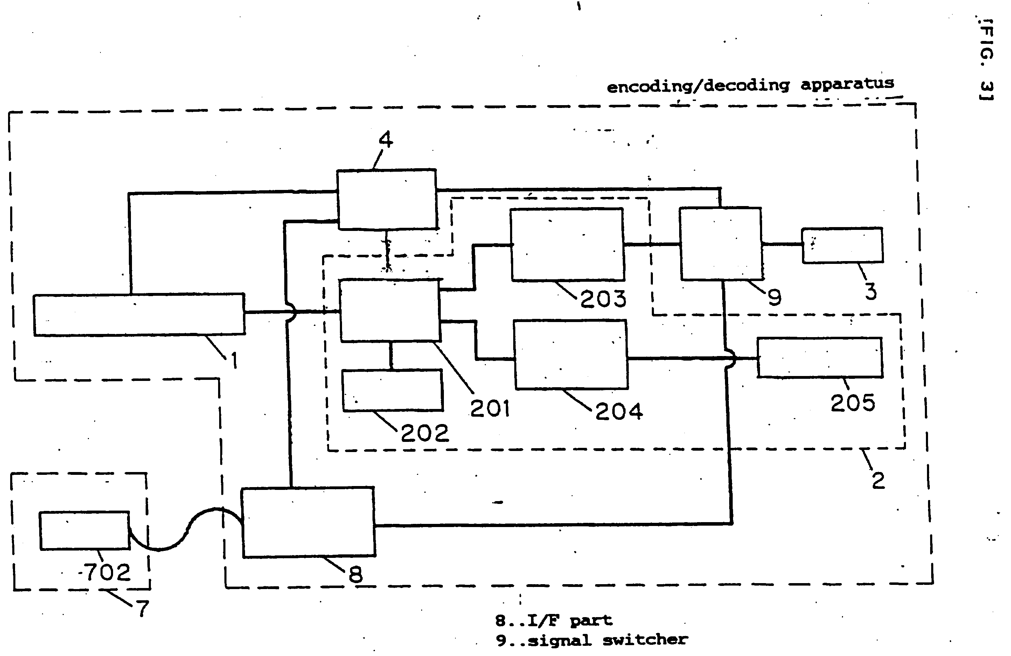

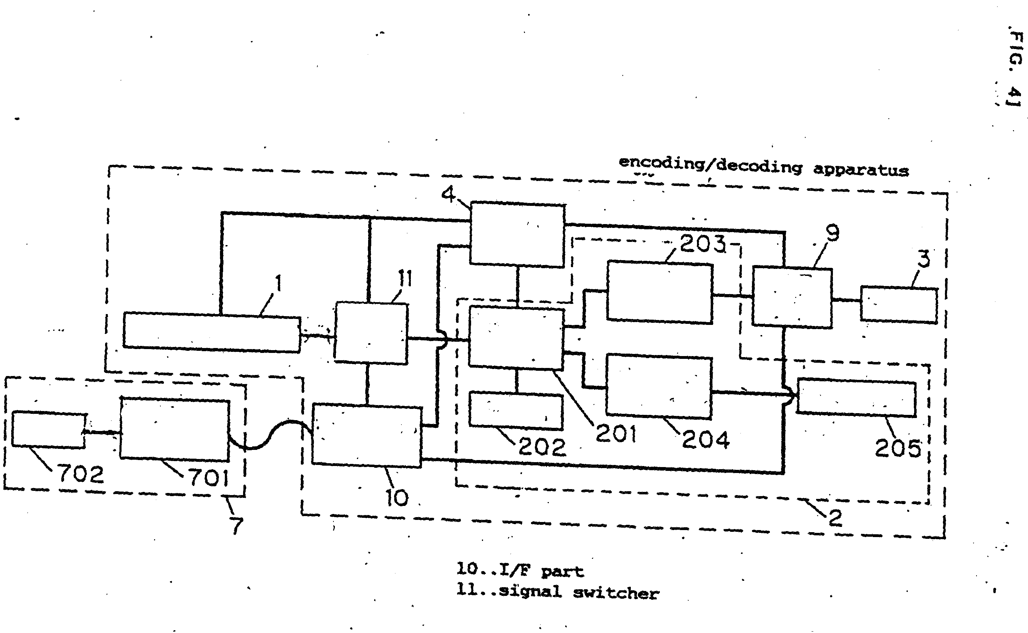

   In FIG. 5, when I/F part 5 detects that external equipment 7 is connected to the encoding/decoding apparatus, a control signal indicating that external equipment 7 is connected is sent from I/F part 5 to control microcomputer 4. A control signal informing that external equipment 7 is connected is sent from the control microcomputer 4 to signal switcher 6. Thus, a route from writing/reading part 1 to personal computer 702 through signal switcher 6, I/F part 5 and input/output interface 701 in order is made. Personal computer 702 sends a decoding command (a control signal) to writing/reading part 1 to get the data from writing/reading part 1. Receiving the decoding command, writing/reading part 1 reads the data from the recorded medium. The bit-stream data read is sent to personal computer 702 through signal switcher 6, I/F part 5 and input/output interface 701 built in external equipment 7. Thus, external equipment 7 can use a data from writing/reading part 1 such as a CD-RAM driver.

A detection of connection of an external equipment is possible by using a switch such as a switch with S terminal for connecting a video cassette recorder or by detecting a voltage or a current on a specified signal line or by detecting a voltage or a current on AC supply line when the AC power of the external equipment is supplied from the AC outlet provided on the encoding/decoding apparatus.

In the case in which a television receiver or a monitor is connected as an external equipment 7, the same picture from writing/reading part 1 as that displayed on display part 3 can simultaneously be watched on the television receiver or the monitor.

In the first exemplary embodiment, a drive unit using a recording medium which is able to write and read such as CD-RAM, MO (magneto-optical disk), HD (hard disk), FD (floppy disk), PD (phase change optical disk), DVD-RAM (digital video disk RAM), MD (mini disk) and the like can be used as a writing/reading part 1. If the apparatus is used only for decoding, a CD drive unit, LD (laser disk) drive unit and the like can be used.

As a signal switcher 6, a switch using a relay device or a semiconductor device such as transistors can be used.

### (Second exemplary embodiment)

A block diagram of an encoding/decoding apparatus providing with an input/output interface for an external equipment in accordance with a second exemplary embodiment of the present invention is shown in FIG. 3. In FIG. 3, a writing/reading part 1, a decoding processing part 2 and a display part 3 function similarly to those of the first exemplary embodiment. The block 7 is an external equipment similar to that of the first exemplary embodiment. The block 8 is an input/output interface for an external equipment (I/F part) and converts a data signal into a video signal (R, G and B) suitable for display part 3 and generates a connection signal when an external equipment is connected. The block 9 is a signal switcher for selecting an input signal to display part 3 from either decoding processing part 2 or I/F part 8 by a command signal from control microcomputer 4. The block 4 is a control microcomputer and controls writing/reading part 1, decoding processing part 2, signal switcher 9 and I/F part 8.
(1) The case in which a data read at writing/reading part 1 is displayed on display part 3.
   Control microcomputer 4 controls signal switcher 6 so as to connect decoding processing part 2 to display part 3 and sends a decoding command to writing/reading part 1. The decoding processing part 2 receives a data read at writing/reading part 1 and processes the received data. Display part 3 displays the processed data.
(2) In the case in which a signal from external equipment 7 is displayed on display part 3 of the encoding/decoding apparatus.
   When I/F part 8 detects that external equipment 7 is connected to the encoding/decoding apparatus, a control signal indicating the connection is sent from I/F part 8 to control microcomputer 4. Receiving the control signal indicating that personal computer 702 as an external equipment is connected, control microcomputer 4 switches signal switcher 9 so as to connect I/F part 8 to display part 3. When a video signal is inputted from personal computer 702, control microcomputer 4 controls I/F part 8 to convert into a digital video signal (R, G and B) suitable for display part 3 and to display the converted signal on display part 3 through signal switcher 9. Thus, it becomes possible to display the signal from external equipment 7 on display part 3, in addition to a usual decoding function by a CD-ROM driver.

In the second exemplary embodiment, although a drive unit using a recording medium which is able to write and read can be used as a writing/reading part 1. it is favorable to use a drive unit for only decoding such as a CD drive unit.

As a signal switcher 9, a switch using a relay device or a semiconductor device such as transistor can be used.

### (Third exemplary embodiment)

A block diagram of an encoding/decoding apparatus providing with an input/output interface for an external equipment in accordance with a third exemplary embodiment of the present invention is shown in FIG. 4.

In FIG. 4, a writing/reading part 1, a decoding processing part 2 and a display part 3 function similarly to those of the first exemplary embodiment. The block 7 is an external equipment. The block 10 is an I/F part and transfers an input signal as it is when the signal from external equipment 7 is a video signal and converts the input signal into a digital video signal (R, G and B) suitable for display part 3 when the signal from external equipment 7 is a data signal and generates a connection signal when external equipment 7 is connected. The block 11 is a signal switcher for supplying a data signal read at writing/reading part 1 either to decoding processing part 2 or to I/F part 10 and for supplying a data signal from I/F part 10 to decoding processing part 2. The block 9 is a second signal switcher and functions similarly to that of the second exemplary embodiment. A control microcomputer 4 controls writing/reading part 1, decoding processing part 2, first signal switcher 11, second signal switcher 9 and I/F part 10.
(1) The case in which a data read at writing/reading part 1 is displayed on display part 3.
   Control microcomputer 4 controls signal switcher 11 so as to connect writing/reading part 1 to decoding processing part 2 and controls signal switcher 9 so as to connect decoding processing part 2 to display part 3 and sends a decoding command to writing/reading part 1 and decoding processing part 2. The decoding processing part 2 receives a data read at the writing/reading part 1 and processes the data like as the prior art. Display part 3 displays the processed data.
(2) In the case in which a signal from external equipment 7 is displayed on display part 3 of the encoding/decoding apparatus.
   When control microcomputer 4 receives a signal indicating that external equipment 7 is connected to decoding processing part 2 from I/F part 10, control microcomputer 4 judges which the signal inputted from external equipment 7 is a video signal or a data signal.
   (2-1) If the signal inputted from external equipment 7 is a video signal, control microcomputer 4 controls I/F part 10 so as to convert the signal into a digital video signal (R, G and B) suitable for display part 3 and controls signal switcher 9 to connect I/F part 10 to display part 3. Thus, the signal inputted from external equipment 7 is displayed on display part 3.
   (2-2) If the signal inputted from external equipment 7 is a data signal, control microcomputer 4 controls signal switcher 11 so as to connect I/F part 10 to decoding processing part 2 and at the same time controls signal switcher 9 so as to connect decoding processing part 2 to display part 3. Thus, the data signal inputted from external equipment 7 is sent to decoding processing part 2 through I/F part 10 and signal switcher 11.

   Control microcomputer 4 sends a decoding command to decoding processing part 2 and decoding processing part 2 decodes and processes the input signal and displays on display part 3 after passing signal switcher 9. Thus, the television receiver having the encoding/decoding apparatus can display the information from external equipment 7, in addition the information from the built-in CD-RAM driver.
(3) In the case in which a data from external equipment 7 is written in writing/reading part 1 of the encoding/decoding apparatus.
   In FIG. 6, when I/F part 10 detects that external equipment 7 is connected, a control signal indicating the connection is sent from I/F part 10 to control microcomputer 4. Control microcomputer 4 sends a control signal for determining a transmission direction of the signal to signal switcher 11. Thus, a route from personal computer 702 to writing/reading part 1 through external input/output interface 701, I/F part 10 and signal switcher 11 in order is made. A bit-stream data signal to be written and a control signal are sent from personal computer 702 to writing/reading part 1 through the above route. Writing/reading part 1 received the data signal and the control signal writes the received data into a recording medium.
(4) The case in which external equipment 7 utilizes writing/reading part 1 of the encoding/decoding apparatus.
   When I/F part 10 detects that external equipment 7 is connected, a control signal indicating that external equipment 7 is connected is sent from I/F part 10 to control microcomputer 4. A control microcomputer 4 sends a control signal for determining a transmission direction of the sinal to signal switcher 11. Thus, a route from writing/reading part 1 to personal computer 702 through signal switcher 11, I/F part 10 and external input/output interface 701 in order is made. Personal computer 702 sends a decoding command (a control signal) to writing/reading part 1 to get the data from writing/reading part 1. Receiving the decoding command, writing/reading part 1 reads the data from the recorded medium of writing/reading part 1. The bit-stream data read is sent to personal computer 702 through signal switcher 11, I/F part 10 and external input/output interface 701 built in external equipment 7. Thus, it becomes possible to utilize writing/reading part 1 such as a CD-RAM driver from external equipment 7, in addition to a usual decoding function by a CD-ROM driver.

In the third exemplary embodiment, a drive unit using a recording medium which is able to write and read such as CD-RAM, MO, HD, FD , PD, DVD-RAM, MD and the like can be used as a writing/reading part 1. If the apparatus is used only for decoding, a CD drive unit, LD drive unit and the like can be used.

As signal switchers 9 and 11, a switch using a relay device or a semiconductor device such as transistor can be used.

As obvious from the above explanation, because the use of an encoding/decoding apparatus built in an electronic appliance as a single unit makes the writing/reading part in the encoding/decoding apparatus possible to use in common for the external equipment, if a video equipment such as a television receiver or a monitor is connected as an external equipment, the same information (picture or data) as that displayed on the main equipment (a television receiver) can be watched on the screen of the connected external equipment and if a personal computer is connected as an external equipment, the same information as that displayed on the display part of the encoding/decoding apparatus can be watched in the display monitor for the personal computer. It gives a great effect in saving space and cost reduction of the total system.

Because the I/F part controlled by the external equipment in the prior art is controlled by a control microcomputer of the encoding/decoding apparatus, a load for the external equipment can be reduced and the external equipment can

The invention may be embodied in other specific form without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An encoding/decoding apparatus providing with an input/output interface for an external equipment comprising:
a recording medium in which a data is written;
writing/reading means for reading the data signal from said recording medium:
decoding processing means for converting the data signal read from said writing/reading means into a video signal;
display means for displaying the video signal from said decoding processing means;
input/output interface means for an external equipment for transferring the data signal read from said writing/reading means to the external equipment;
signal switching means for supplying the output of said writing/reading means to either said decoding processing means or said input/output interface means for an external equipment; and
control means for controlling said writing/reading means, said decoding processing means, said signal switching means and said input/output interface means for an external equipment.

2. An encoding/decoding apparatus providing with an input/output interface for an external equipment comprising:
a recording medium in which a data can be written;
writing/reading means for writing a data signal in said recording medium:
input/output interface means for an external equipment for transferring a data signal from an external equipment ;
decoding processing means for converting the data signal from said input/output interface means for an external equipment into a video signal;
display means for displaying the video signal from said decoding processing means;
signal switching means for supplying the output of said input/output interface means for an external equipment to either said writing/reading means or said decoding processing means; and
control means for controlling said writing/reading means, said decoding processing means, said signal switching means and said input/output interface means for an external equipment.

3. An encoding/decoding apparatus providing with an input/output interface for an external equipment comprising:
a recording medium in which a data is written;
writing/reading means for reading the data signal from said recording medium:
decoding processing means for converting the data signal read from said writing/reading means into a video signal;
display means for displaying the video signal from said decoding processing means;
input/output interface means for an external equipment for transferring the data signal from an external equipment ;
signal switching means for supplying an output from either said writing/reading means or said input/output interface means for an external equipment to said decoding processing means; and
control means for controlling said writing/reading means, said decoding processing means, said signal switching means and said input/output interface means for an external equipment.

4. An encoding/decoding apparatus providing with an input/output interface for an external equipment comprising:
a recording medium in which a data is written;
writing/reading means for reading the data signal from said recording medium:
decoding processing means for converting the data signal read from said writing/reading means into a video signal;
input/output interface means for an external equipment for converting the data signal from an external equipment into a video signal;
signal switching means for supplying an output from either said writing/reading means or said input/output interface means for an external equipment to display means;
said display means for displaying the video signal from said signal switching means; and
control means for controlling said writing/reading means, said decoding processing means, said signal switching means and said input/output interface means for an external equipment.

5. An encoding/decoding apparatus providing with an input/output interface for an external equipment comprising:
a recording medium in which a data is written or can be written;
writing/reading means for reading the data signal from said recording medium or writing the data signal in said recording medium:
decoding processing means for converting the data signal read from said writing/reading means into a video signal;
input/output interface means for an external equipment for transferring the data signal read from said writing/reading means to an external equipment or converting the data signal from the external equipment into a video signal;
first signal switching means for connecting said writing/reading means and either said decoding processing means or said input/output interface means for an external equipment and for connecting said input/output interface means for an external equipment and either said writing/reading means or said decoding processing means;
second signal switching means for supplying an output from either said decoding processing means or said input/output interface means for an external equipment;
display means for displaying the video signal from said second signal switching means; and
control means for controlling said writing/reading means, said decoding processing means, said first signal switching means, said second signal switching means and said input/output interface means for an external equipment.
